# EUROPÄISCHE PATENTSCHRIFT

(11) **EP 2 493 729 B1**
(45) Veröffentlichungstag und Bekanntmachung des Hinweises auf die Patenterteilung: **05.06.2013**
(21) Anmeldenummer: 10751606.4
(22) Anmeldetag: 30.08.2010
(51) Int. Cl.: B60S 1/04, B60S 1/34

(54) **ANTRIEBSEINRICHTUNG FÜR EINE SCHEIBENWISCHVORRICHTUNG EINES FAHRZEUGS**
DRIVE DEVICE FOR A WINDSHIELD WIPER UNIT OF A VEHICLE
DISPOSITIF D'ENTRAÎNEMENT POUR UN DISPOSITIF D'ESSUIE-GLACE D'UN VÉHICULE

(30) Priorität: 30.10.2009 DE 102009046203
(43) Veröffentlichungstag der Anmeldung: 05.09.2012
(73) Patentinhaber: Robert Bosch GmbH, 70442 Stuttgart (DE)
(72) Erfinder: BARLAS, Burak, 76534 Baden-Baden (DE); KRAUS, Achim, 77815 Buehl (DE)
(86) Internationale Anmeldenummer: PCT/EP2010/062608
(87) Internationale Veröffentlichungsnummer: WO 2011/051018

(56) Entgegenhaltungen:
- EP-A1- 1 837 256
- EP-A2- 2 072 358
- DE-A1-102006 027 345

## Beschreibung

Die Erfindung bezieht sich auf eine Antriebseinrichtung für eine Scheibenwischvorrichtung eines Fahrzeugs nach dem Oberbegriff des Anspruches 1.

### Stand der Technik

Eine Antriebseinrichtung in einer Scheibenwischvorrichtung ist aus der DE 10 2006 027 345 A1 bekannt. Die Antriebseinrichtung umfasst einen Antriebs- bzw. Kurbelarm, welcher über ein Gestänge von einem Antriebsmotor angetrieben wird und der mit einer Wischerwelle zur Aufnahme eines Wischerarms drehgekoppelt ist. Zwischen Kurbelarm und Wischerwelle ist ein Verbindungselement angeordnet, das als Formteil aus Kunststoff ausgeführt ist. Das Verbindungselement dient zur Befestigung des Wischerarms an der Wischerwelle, nicht jedoch zur Kraft- bzw. Momentenübertragung, die über einen unmittelbaren Kontakt zwischen Kurbelarm und Wischerwelle erfolgt. Hierfür besitzt der Kurbelarm eine Ausnehmung mit wellenförmigem oder polygonartigem Querschnitt, durch die die Wischerwelle hindurchgeführt ist, wobei über die Wellen- bzw. Polygonform, die an einem rändelförmigen Abschnitt an der Wischerwelle angreift, ein hinreichender Kraft- bzw. Formschluss zur Übertragung der erforderlichen Momente gegeben sein soll. Das Kunststoff-Verbindungselement dient lediglich zur axialen Sicherung des Kurbelarms an der Wischerwelle, indem ein ringförmiger Wulst an der Innenseite des hülsenförmigen Verbindungselements formschlüssig in eine Ringnut an der Mantelfläche der Wischerwelle eingreift.

### Offenbarung der Erfindung

Der Erfindung liegt die Aufgabe zu Grunde, eine Antriebseinrichtung in einer Scheibenwischvorrichtung mit einfachen konstruktiven Maßnahmen in der Weise auszubilden, dass die Antriebseinrichtung bei einem Aufprall eines Fußgängers ausweicht, wobei zugleich im regulären Betrieb eine hinreichende Kraft- bzw. Momentenübertragung in der Antriebseinrichtung gewährleistet sein soll.

Diese Aufgabe wird erfindungsgemäß mit den Merkmalen des Anspruches 1 gelöst. Die Unteransprüche geben zweckmäßige Weiterbildungen an.

Die erfindungsgemäße Antriebseinrichtung ist Bestandteil einer Scheibenwischvorrichtung in einem Fahrzeug, über die die Frontscheibe oder die Heckscheibe des Fahrzeugs gereinigt werden kann. Die Antriebseinrichtung umfasst einen Kurbelarm, der üblicherweise über ein Kurbelgestänge von einem elektrischen Antriebsmotor angetrieben wird, sowie eine Wischerwelle, die Träger des Wischerarms ist und von dem Kurbelarm in eine Drehpendelbewegung versetzt wird. Die kraft- bzw. momentenübertragende Verbindung zwischen dem Kurbelarm und der Wischerwelle erfolgt ausschließlich über ein Verbindungselement aus Kunststoff, das sowohl an den Kurbelarm als auch an einen Verbindungsabschnitt der Wischerwelle angespritzt ist. Über das Verbindungselement aus Kunststoff hinausgehend sind keine weiteren Verbindungsmaßnahmen zwischen Kurbelarm und Wischerwelle erforderlich. Insbesondere erfolgt sowohl in Drehrichtung als auch in Achsrichtung die Momenten- bzw. Kraftübertragung ausschließlich über das Verbindungselement.

Auf diese Weise erhält man mit einfachen Maßnahmen eine kraft- bzw. momentenübertragende Verbindung, bei der zum einen mit hinreichender Sicherheit im regulären Betrieb der Scheibenwischvorrichtung die Antriebsbewegung des Wischerarms gewährleistet und zum anderen als Fußgängeraufprallschutz beim Aufprall eines Fußgängers sichergestellt ist, dass zum Realisieren einer Abtauchbewegung der Antriebseinrichtung die axiale Verbindung zwischen Wischerwelle und Kurbelarm gelöst wird, so dass die Wischerwelle einschließlich des daran gelagerten Wischerarms axial zurückweichen kann. Dem Verbindungselement kommen somit zwei Funktionen zu: zum einen die Momentenübertragung vom Kurbelarm auf die Wischerwelle für die Antriebsbewegung des Wischerarms und zum andern die Sicherheitsfunktion, bei der Kurbelarm und Wischerwelle im Falle einer definierten axialen Kraft in Achsrichtung voneinander gelöst werden. Beide Funktionen werden mit dem gleichen Verbindungselement erreicht, wohingegen im Stand der Technik zusätzlich zum Verbindungselement noch eine kraft- oder formschlüssige, unmittelbare Kopplung zwischen Kurbelarm und Wischerwelle erforderlich ist. Die erfindungsgemäße Ausführung ist gegenüber dem Stand der Technik ohne Einschränkung der Funktionalität konstruktiv einfacher ausgebildet.

Da das Kunststoff-Verbindungselement nicht nur an dem Kurbelarm, sondern zusätzlich auch an der Wischerwelle angespritzt ist, ist eine feste Verbindung in Achsrichtung gegeben, die bei Überschreiten eines bestimmten Kraftniveaus gelöst wird. Das Kraftniveau wird beeinflusst zum einen von der Oberfläche des Verbindungsabschnittes an der Wischerwelle, an welchem das Verbindungselement aus Kunststoff angreift. So kann es beispielsweise zweckmäßig sein, die Oberfläche des Verbindungsabschnittes rändelförmig auszuführen, um über die erhöhte Rauhigkeit der Mantelfläche eine bessere Haftung des Materials des Verbindungselementes an der Wischerwelle zu erreichen; auf diese Weise wird sowohl die Axialkraft als auch das Moment um die Wischerwellenachse, welches vom Kurbelarm übertragen wird, erhöht.

Zum anderen ist es zusätzlich oder alternativ möglich, an der Mantelfläche der Wischerwelle ein Formschlusselement vorzusehen, mit dem das angespritzte Verbindungselement zumindest in Achsrichtung, ggf. auch in Umfangsrichtung formschlüssig verbunden ist. In einer einfachen Ausführung ist vorgesehen, dass das Formschlusselement als eine Ringnut ausgeführt ist, die in die Mantelfläche der Wischerwelle eingebracht ist. Mit dem Anspritzen des Verbindungselementes an der Wischerwelle wird die Ringnut mit Material des Verbindungselementes ausgefüllt, wodurch in Achsrichtung eine Hinterschneidung zwischen Wischerwelle und Verbindungselement gegeben ist und ein erhöhtes axiales Kraftniveau eingestellt werden kann. Die die Ringnut bestimmende Parameter wie z.B. die radiale Einschnürung der Ringnut sowie die axiale Erstreckung spielen im Hinblick auf das axiale Kraftniveau eine Rolle, welches zwischen Kurbelarm und Wischerwelle ohne Lösen der Verbindung übertragbar ist. Um sicherzustellen, dass bei Überschreitung eines Grenzwertes die Axialkraft zu einem gewünschten Lösen der axialen Verbindung zwischen Verbindungselement und Wischerwelle führt, beträgt der Durchmesser der Ringnut im Bereich des Nutgrundes zumindest 95 % des Durchmessers des Verbindungsabschnittes der Wischerwelle, so dass gewährleistet ist, dass die radiale Einschnürung der Ringnut ein bestimmtes Maß nicht überschreitet. Auch die axiale Erstreckung der Ringnut kann begrenzt sein, beispielsweise auf das doppelte Maß der radialen Einschnürung der Ringnut.

Der Kurbelarm ist vorzugsweise mit einer Aufnahmeöffnung zur Aufnahme der Wischerwelle versehen, wobei im montierten Zustand die Wischerwelle durch die Aufnahmeöffnung hindurchragt, jedoch die Kraftübertragung zwischen Kurbelarm und Wischerwelle sowohl in Achsrichtung als auch in Drehrichtung über das angespritzte Verbindungselement und nicht unmittelbar zwischen Kurbelarm und Wischerwelle erfolgt. Es genügt somit, eine ausreichend große Aufnahmeöffnung im Kurbelarm für die Wischerwelle vorzusehen ohne die Notwendigkeit eines exakt auf die Wischerwelle angepassten Querschnittes. So ist es insbesondere möglich, dass die Aufnahmeöffnung eine andere Querschnittsform aufweist als die Wischerwelle im Bereich des Verbindungsabschnittes, wobei die Aufnahmeöffnung beispielsweise einen eckigen, insbesondere einen quadratischen Querschnitt und der Verbindungsabschnitt an der Wischerwelle einen runden Querschnitt besitzt. Die Verbindungs- und Haltekräfte zwischen Kurbelarm und Wischerwelle werden über das Verbindungselement aufgebracht.

Es kann zweckmäßig sein, am Verbindungselement eine die Wischerwelle in Umfangsrichtung vollständig oder teilweise umgreifende Schutzkappe vorzusehen, die den Eintritt von Wasser oder Schmutz in das Wischerlager verhindert. Die Schutzkappe besitzt beispielsweise eine zylindrische Geometrie, wobei grundsätzlich auch sonstige Geometrieformen möglich sind, beispielsweise eine eckige Geometrie. Zweckmäßigerweise liegt eine Wandung oder liegen mehrere Wandungen der Schutzkappe mit radialem Abstand zur Mantelfläche der Wischerwelle.

Weitere Vorteile und zweckmäßige Ausführungen sind den weiteren Ansprüchen, der Figurenbeschreibung und den Zeichnungen zu entnehmen. Es zeigen:
- Fig. 1: eine Antriebseinrichtung in einer Scheibenwischvorrichtung eines Fahrzeuges, mit einer Wischerwelle zur Aufnahme eines Wischerarms und einem Kurbelarm, über den die Wischerwelle angetrieben wird, wobei die Verbindung zwischen Kurbelarm und Wischerwelle über ein Kunststoff-Verbindungselement erfolgt,
- Fig. 2: die Antriebseinrichtung gemäß Fig. 1 mit der Wischerwelle in einer axial verschobenen Position,
- Fig. 3: einen Schnitt durch die Antriebseinrichtung,
- Fig. 4: eine Ausschnittsvergrößerung des in Fig. 3 strichpunktiert eingekreisten Bereichs,
- Fig. 5: eine perspektivische Ansicht der Antriebseinrichtung,
- Fig. 6: eine ähnliche Darstellung wie Fig. 4,
- Fig. 7: eine perspektivische Ansicht einer Antriebseinrichtung in einer weiteren Ausführungsvariante, bei der das Verbindungselement zwischen Kurbelarm und Wischerwelle annähernd quaderförmig ausgebildet ist,
- Fig. 8 bis 10: die Wischerwelle, der Kurbelarm und das Verbindungselement der Antriebseinrichtung gemäß Fig. 7 in Einzeldarstellung.

In den Figuren sind gleiche Bauteile mit gleichen Bezugszeichen versehen.

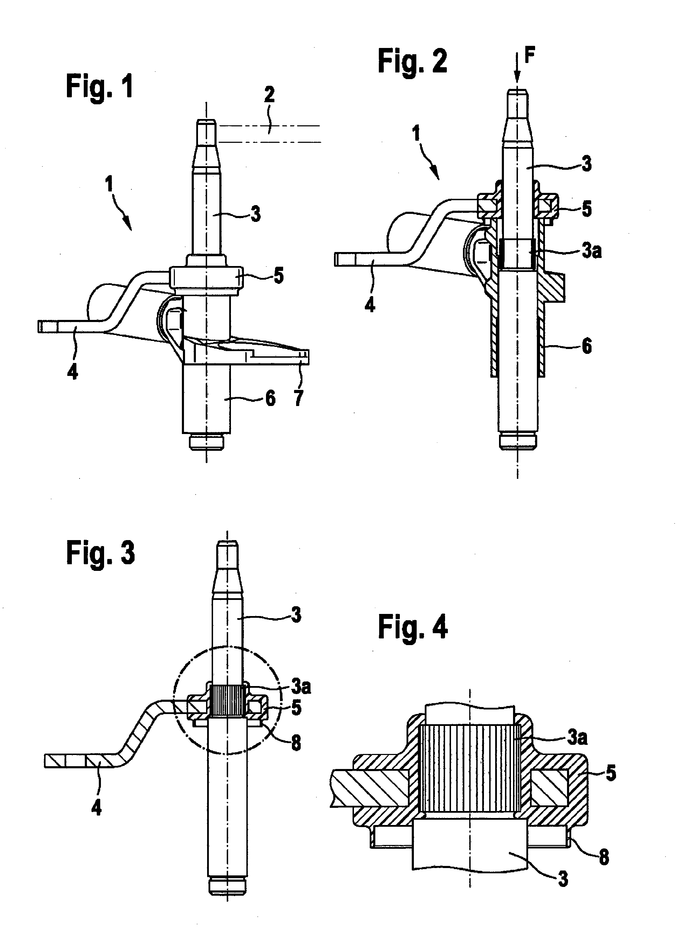

In Fig. 1 ist eine Antriebseinrichtung 1 in einer Scheibenwischvorrichtung in einem Fahrzeug zum Antrieb eines Wischerarms 2 dargestellt, welcher auf einer Fahrzeugscheibe, insbesondere der Frontscheibe oder der Heckscheibe des Fahrzeugs aufliegt und in eine Drehpendelbewegung versetzt werden kann. Der Wischerarm 2 ist an der Stirnseite einer Wischerwelle 3 drehfest gehalten, welche über einen Kurbelarm 4 von einem elektrischen Antriebsmotor angetrieben wird. Der Kurbelarm 4 ist über ein Kunststoff-Verbindungselement 5 drehfest sowie in Achsrichtung fest mit der Wischerwelle 3 gekoppelt. Die Wischerwelle 3 ist in einer Befestigungshülse 6 aufgenommen, die an einem Wischergestänge 7 gehalten ist bzw. mit einem Bauteil des Wischergestänges einteilig ausgeführt ist. Die Befestigungshülse 6 ist an beiden Stirnseiten offen ausgebildet, die axiale Fixierung der Wischerwelle 3 erfolgt ausschließlich über den Kurbelarm 4 und das Verbindungselement 5.

In Fig. 1 ist die Antriebseinrichtung 1 in der regulären Betriebsposition dargestellt. Falls auf die dem Wischerarm zugewandte Stirnseite der Wischerwelle 3 eine axiale Kraft F wirkt, welche einen Grenzwert überschreitet, beispielsweise bei einem Aufprall eines Fußgängers, so löst sich die Wischerwelle 3 axial vom Verbindungselement 5 und wird axial in der aufnehmenden Befestigungshülse 6 verschoben. Auf diese Weise kann ein Fußgängeraufprallschutzsystem realisiert werden.

Wie Fig. 2 zu entnehmen, liegt in der axial verschobenen Position ein Verbindungsabschnitt 3a der Wischerwelle 3 auf axialem Abstand zum Kunststoff-Verbindungselement 5.

Aus Fig. 3 geht hervor, dass in der regulären Betriebsposition das Kunststoff-Verbindungselement 5, welches zumindest annähernd scheibenförmig ausgebildet ist und eine zentrale Ausnehmung für die Wischerwelle aufweist, im Bereich des Verbindungsabschnittes 3a mit der Wischerwelle verbunden ist. Der Verbindungsabschnitt 3a ist zylindrisch ausgeführt und weist eine gerändelte Mantelfläche auf, wodurch die Haftung des Verbindungselementes 5 am Verbindungsabschnitt 3a verbessert wird. Das Verbindungselement 5 besteht aus einem spritzgussfähigen Kunststoff und wird sowohl an den Verbindungsabschnitt 3a der Wischerwelle 3 als auch an den Kurbelarm 4 angespritzt. Die Verbindung zwischen Kurbelarm 4 und Wischerwelle 3 erfolgt ausschließlich über das Verbindungselement 5. Der Kurbelarm 4 weist ebenfalls eine Aufnahmeöffnung auf, durch die die Wischerwelle 3 geführt ist, wobei die Aufnahmeöffnung 4 größer dimensioniert ist als die Wischerwelle 3 im Bereich des Verbindungsabschnittes 3a, wobei mit dem Anspritzen des Verbindungselementes 5 das Material des Verbindungselementes den verbleibenden Zwischenraum zwischen der Mantelfläche des Verbindungsabschnittes 3a und der Innenseite der Aufnahmeöffnung in dem Kurbelarm 4 vollständig ausfüllt. Über das Verbindungselement 5 werden sowohl Antriebsmomente um die Längsachse 3, welche durch die Betätigung über den Kurbelarm 4 erzeugt werden, als auch axiale Haltekräfte übertragen.

Wie Fig. 3 in Verbindung mit der vergrößerten Darstellung gemäß Fig. 4 zu entnehmen, weist das Verbindungselement 5 eine stirnseitige Schutzkappe 8 auf, die auf der dem Wischerarm abgewandten Seite des Verbindungselementes angeordnet ist und einteilig mit dem Verbindungselement ausgeführt ist. Die Schutzkappe 8 ist kragenförmig ausgebildet und weist Zylinderform auf. Die Schutzkappe 8 liegt auf radialen Abstand zur Mantelfläche der Wischerwelle 3 und hat die Funktion, den Eintritt von Wasser und Schmutz in das Wischerlager zu verhindern.

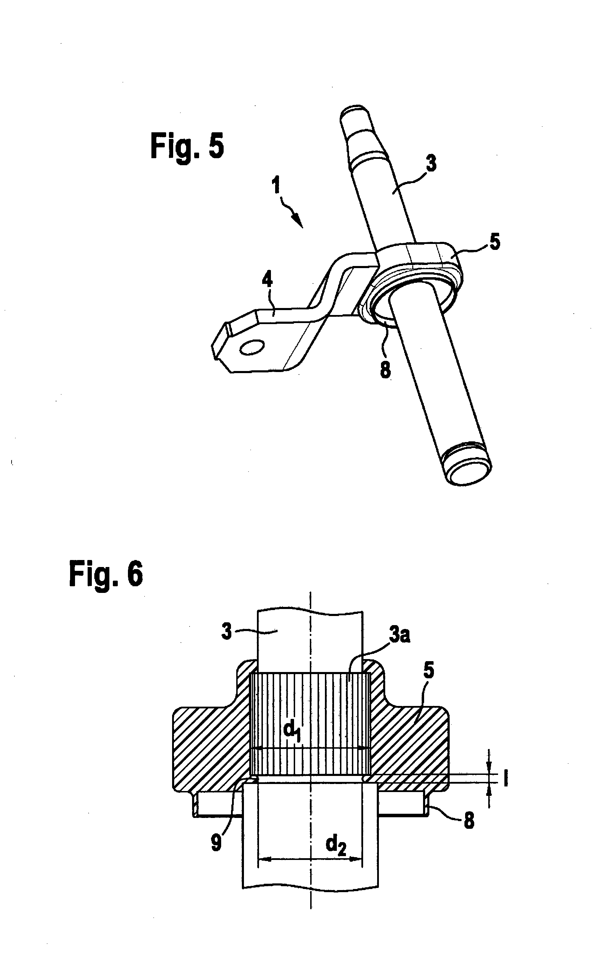

Die Zylinderform der Schutzkappe 8 sowie der im Vergleich zur Wischerwelle größere Durchmesser der Schutzkappe ist auch der perspektivischen Darstellung gemäß Fig. 5 zu entnehmen.

Wie der Darstellung gemäß Fig. 6 zu entnehmen, schließt sich axial an den Verbindungsabschnitt 3a der Wischerwelle 3 eine Ringnut 9 an, die die Funktion hat, die Verbindung zwischen Wischerwelle 3 und Verbindungselement 5 durch Herstellen eines Formschlusses zu verbessern. In die Ringnut 9 strömt beim Anspritzen des Verbindungselementes 5 Kunststoffmaterial ein, wodurch in Achsrichtung eine Hinterschneidung gegeben ist und dementsprechend die Lösekräfte, welche für ein Lösen der Wischerwelle 3 von dem Verbindungselement 5 in Achsrichtung erforderlich sind, erhöht sind. Die axialen Lösekräfte hängen von der Geometrie der Ringnut 9 ab, insbesondere von der axialen Länge I sowie vom Durchmesser d₂ im Bereich des Nutgrundes gegenüber dem Durchmesser d₁ des Verbindungsabschnittes 3a. Um die axialen Lösekräfte auf ein definiertes Maß zu begrenzen, ist es zweckmäßig, dass der Durchmesser d₂ der Ringnut 9 einen Mindestwert des Durchmessers d₁ des Verbindungsabschnittes 3a aufweist, beispielsweise mindestens 95 % beträgt. Des Weiteren ist die axiale Länge I der Ringnut 9 begrenzt, beispielsweise auf das Doppelte der radialen Tiefe bzw. Einschnürung der Ringnut, wobei die radiale Einschnürung der Differenz der Durchmesser d₁ und d₂ entspricht.

Die Ringnut 9 befindet sich auf der dem Wischerarm axial gegenüberliegenden Seite und schließt sich unmittelbar an den Verbindungsabschnitt 3a an.

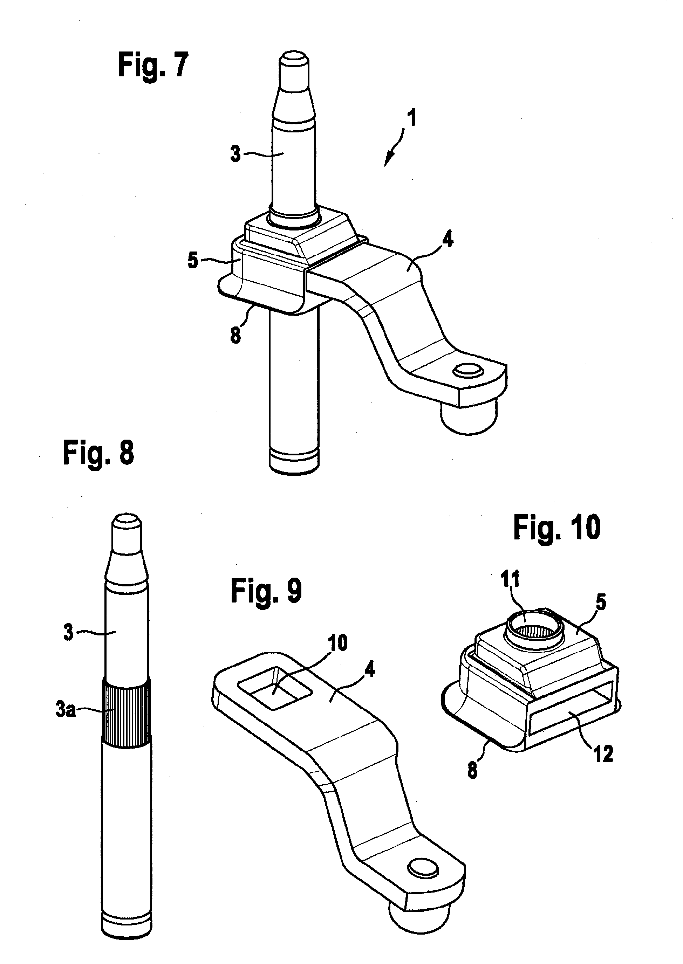

In Fig. 7 ist ein weiteres Ausführungsbeispiel für eine Antriebseinrichtung 1 dargestellt, die Figuren 8 bis 10 zeigen die Wischerwelle 3, den Kurbelarm 4 sowie das Verbindungselement 5 der Antriebseinrichtung aus Fig. 1. Das Verbindungselement 5 ist zumindest annähernd quaderförmig ausgestaltet, dementsprechend besteht die Schutzkappe 8 aus geradlinigen Abschnitten, die sich an einer Stimseite des Verbindungsabschnittes 5 erstrecken. Die Wandungen der Schutzkappe 8 liegen auf radialem Abstand zur Mantelfläche der Wischerwelle 3, sie sind bezogen auf die Wischerwellenlängsachse winklig nach außen geneigt.

Das Verbindungselement 5 weist eine zentrale, sich in Achsrichtung erstreckende Ausnehmung 11 zur Aufnahme der Wischerwelle 3 sowie eine radiale Einstecköffnung 12 zur Aufnahme eines Abschnittes des Kurbelarms 4 auf. Auch in diesem Ausführungsbeispiel wird das Verbindungselement 5 sowohl an die Wischerwelle 3 im Bereich des Verbindungsabschnittes 3a als auch an den stirnseitigen Abschnitt des Kurbelarms 4 angespritzt. Der Kurbelarm 4 ist mit einer zentralen Aufnahmeöffnung 10 versehen, durch die die Kurbelwelle 3 hindurch gesteckt wird. Die Aufnahmeöffnung 10 weist eine von der Wischerwelle 3 abweichende Querschnittsgeometrie auf, im Ausführungsbeispiel besitzt die Aufnahmeöffnung 10 einen quadratischen Querschnitt, der jedoch ausreichend groß dimensioniert ist für die Aufnahme der zylindrischen Wischerwelle 3. Die Zwischenräume zwischen der Innenwandung der Aufnahmeöffnung 10 und der Mantelfläche des Verbindungsabschnittes 3a der Wischerwelle 3 werden von dem Material des Verbindungselementes 5 ausgefüllt.

## Patentansprüche

1. Antriebseinrichtung für eine Scheibenwischvorrichtung eines Fahrzeugs, mit einem Kurbelarm (4), der mit einer Wischerwelle (3) über ein angespritztes Verbindungselement (5) aus Kunststoff verbunden ist, **dadurch gekennzeichnet, dass** das Verbindungselement (5) sowohl an den Kurbelarm (4) als auch an einen Verbindungsabschnitt (3a) der Wischerwelle (3) angespritzt ist, dergestalt, dass der Kurbelarm (4) ausschließlich über das Verbindungselement (5) mit der Wischerwelle (3) verbunden ist.

2. Antriebseinrichtung nach Anspruch 1, **dadurch gekennzeichnet, dass** der Verbindungsabschnitt (3a) der Wischerwelle (3) zylindrisch ausgebildet ist.

3. Antriebseinrichtung nach Anspruch 1 oder 2, **dadurch gekennzeichnet, dass** der Verbindungsabschnitt (3a) der Wischerwelle (3) mit einer Rändelung versehen ist.

4. Antriebseinrichtung nach einem der Ansprüche 1 bis 3, **dadurch gekennzeichnet, dass** an der Mantelfläche der Wischerwelle (3) ein Formschlusselement (9) angeformt ist, mit dem das angespritzte Verbindungselement (5) in Achsrichtung formschlüssig verbunden ist.

5. Antriebseinrichtung nach Anspruch 4, **dadurch gekennzeichnet, dass** das Formschlusselement als Ringnut (9) an der Wischerwelle (3) ausgebildet ist.

6. Antriebseinrichtung nach Anspruch 5, **dadurch gekennzeichnet, dass** der Durchmesser der Ringnut (9) im Bereich des Nutgrundes einen Mindestwert des Durchmessers des Verbindungsabschnitts (3a) der Wischerwelle (3) überschreitet, beispielsweise mindestens 95% beträgt.

7. Antriebseinrichtung nach Anspruch 5 oder 6, **dadurch gekennzeichnet, dass** die axiale Länge der Ringnut (9) einen Maximalwert der radialen Tiefe der Ringnut (9) nicht überschreitet, beispielsweise maximal doppelt so groß ist wie die radiale Tiefe der Ringnut (9).

8. Antriebseinrichtung nach einem der Ansprüche 1 bis 7, **dadurch gekennzeichnet, dass** in den Kurbelarm (4) eine Aufnahmeöffnung (10) zur Aufnahme der Wischerwelle (3) eingebracht ist, wobei die Kraftübertragung zwischen Kurbelarm (4) und Wischerwelle (3) über das angespritzte Verbindungselement (5) erfolgt.

9. Antriebseinrichtung nach Anspruch 8, **dadurch gekennzeichnet, dass** die Aufnahmeöffnung (10) einen quadratischen Querschnitt aufweist.

10. Antriebseinrichtung nach einem der Ansprüche 1 bis 9, **dadurch gekennzeichnet, dass** am Verbindungselement (5) eine die Wischerwelle (3) umgreifende Schutzkappe (8) angeformt ist.

11. Antriebseinrichtung nach Anspruch 10, **dadurch gekennzeichnet, dass** die Schutzkappe (8) mit radialem Abstand zur Mantelfläche der Wischerwelle (3) angeordnet ist.

12. Scheibenwischvorrichtung mit einer Antriebseinrichtung nach einem der Ansprüche 1 bis 11.

## Claims

1. Drive device for a windscreen wiper apparatus of a vehicle, having a crank arm (4) which is connected to a wiper shaft (3) via a moulded-on connecting element (5) composed of plastic, **characterized in that** the connecting element (5) is moulded both onto the crank arm (4) and also onto a connecting portion (3a) of the wiper shaft (3), in such a way that the crank arm (4) is connected to the wiper shaft (3) exclusively via the connecting element (5).

2. Drive device according to Claim 1, **characterized in that** the connecting portion (3a) of the wiper shaft (3) is of cylindrical form.

3. Drive device according to Claim 1 or 2, **characterized in that** the connecting portion (3a) of the wiper shaft (3) is provided with a knurling.

4. Drive device according to one of Claims 1 to 3, **characterized in that** a positive-locking element (9) is integrally formed on the lateral surface of the wiper shaft (3), to which positive-locking element the moulded-on connecting element (5) is connected in a positively locking manner in the axial direction.

5. Drive device according to Claim 4, **characterized in that** the positive-locking element is in the form of an annular groove (9) on the wiper shaft (3).

6. Drive device according to Claim 5, **characterized in that** the diameter of the annular groove (9) in the region of the groove base exceeds a minimum value of the diameter of the connecting portion (3a) of the wiper shaft (3), for example amounts to at least 95%.

7. Drive device according to Claim 5 or 6, **characterized in that** the axial length of the annular groove (9) does not exceed a maximum value of the radial depth of the annular groove (9), for example is at most twice as large as the radial depth of the annular groove (9).

8. Drive device according to one of Claims 1 to 7, **characterized in that** a receiving opening (10) for receiving the wiper shaft (3) is formed into the crank arm (4), wherein the transmission of force between the crank arm (4) and the wiper shaft (3) takes place via the moulded-on connecting element (5).

9. Drive device according to Claim 8, **characterized in that** the receiving opening (10) has a square cross section.

10. Drive device according to one of Claims 1 to 9, **characterized in that** a protective cap (8) which engages around the wiper shaft (3) is integrally formed on the connecting element (5).

11. Drive device according to Claim 10, **characterized in that** the protective cap (8) is arranged with a radial spacing to the lateral surface of the wiper shaft (3).

12. Windscreen wiper apparatus having a drive device according to one of Claims 1 to 11.

## Revendications

1. Système d'entraînement pour un dispositif d'essuie-glace d'un véhicule, comprenant un bras de manivelle (4) qui est connecté à un arbre d'essuie-glace (3) par le biais d'un élément de liaison surmoulé (5) en plastique, **caractérisé en ce que** l'élément de liaison (5) est surmoulé à la fois sur le bras de manivelle (4) et sur une portion de liaison (3a) de l'arbre d'essuie-glace (3) de telle sorte que le bras de manivelle (4) soit connecté exclusivement par le biais de l'élément de liaison (5) à l'arbre d'essuie-glace (3).

2. Système d'entraînement selon la revendication 1, **caractérisé en ce que** la portion de liaison (3a) de l'arbre d'essuie-glace (3) est réalisée sous forme cylindrique.

3. Système d'entraînement selon la revendication 1 ou 2, **caractérisé en ce que** la portion de liaison (3a) de l'arbre d'essuie-glace (3) est pourvue d'un moletage.

4. Système d'entraînement selon l'une quelconque des revendications 1 à 3, **caractérisé en ce qu'**un élément d'engagement par correspondance de forme (9) est façonné sur la surface d'enveloppe de l'arbre d'essuie-glace (3), ledit élément d'engagement par correspondance de forme étant connecté par engagement par correspondance de forme avec l'élément de liaison surmoulé (5) dans la direction axiale.

5. Système d'entraînement selon la revendication 4, **caractérisé en ce que** l'élément d'engagement par correspondance de forme est réalisé sous forme de rainure annulaire (9) sur l'arbre d'essuie-glace (3).

6. Système d'entraînement selon la revendication 5, **caractérisé en ce que** le diamètre de la rainure annulaire (9) dans la région du fond de rainure dépasse une valeur minimale du diamètre de la portion de liaison (3a) de l'arbre d'essuie-glace (3), par exemple d'au moins 95 %.

7. Système d'entraînement selon la revendication 5 ou 6, **caractérisé en ce que** la longueur axiale de la rainure annulaire (9) ne dépasse pas une valeur maximale de la profondeur radiale de la rainure annulaire (9), par exemple est au maximum deux fois plus grande que la profondeur radiale de la rainure annulaire (9).

8. Système d'entraînement selon l'une quelconque des revendications 1 à 7, **caractérisé en ce qu'**une ouverture de réception (10) pour recevoir l'arbre d'essuie-glace (3) est pratiquée dans le bras de manivelle (4), le transfert de force entre le bras de manivelle (4) et l'arbre d'essuie-glace (3) se produisant par le biais de l'élément de liaison surmoulé (5).

9. Système d'entraînement selon la revendication 8, **caractérisé en ce que** l'ouverture de réception (10) présente une section transversale parallélépipédique.

10. Système d'entraînement selon l'une quelconque des revendications 1 à 9, **caractérisé en ce qu'**un capuchon de protection (8) venant en prise autour de l'arbre d'essuie-glace (3) est façonné sur l'élément de liaison (5).

11. Système d'entraînement selon la revendication 10, **caractérisé en ce que** le capuchon de protection (8) est disposé à distance radiale de la surface d'enveloppe de l'arbre d'essuie-glace (3).

12. Dispositif d'essuie-glace comprenant un système d'entraînement selon l'une quelconque des revendications 1 à 11.
